# EUROPÄISCHE PATENTSCHRIFT

(11) **EP 1 192 037 B1**
(45) Veröffentlichungstag und Bekanntmachung des Hinweises auf die Patenterteilung: **11.12.2002**
(21) Anmeldenummer: 00943449.9
(22) Anmeldetag: 16.06.2000
(51) Int. Cl.: B29C 47/76, B29C 47/50, B29C 47/10

(54) **VORRICHTUNG ZUR ENTGASUNG VON SCHMELZE**
DEVICE FOR DEGASIFYING A MELT
DISPOSITIF DE DEGAZAGE D'UNE MASSE FONDUE

(30) Priorität: 18.06.1999 AT 107999
(43) Veröffentlichungstag der Anmeldung: 03.04.2002
(73) Patentinhaber: STARLINGER & CO. GESELLSCHAFT MBH, 1060 Wien (AT)
(72) Erfinder: STARLINGER HUEMER, Franz, A-1060 Wien (AT)
(74) Vertreter: Margotti, Herwig Franz
(86) Internationale Anmeldenummer: AT0000163
(87) Internationale Veröffentlichungsnummer: WO00078524

(56) Entgegenhaltungen:
- EP-A- 0 316 760
- EP-A- 0 597 271
- WO-A-00/53391
- AT-B- 283 709

## Beschreibung

Die Erfindung betrifft eine Vorrichtung zur Entgasung von Schmelze, insbesondere Kunststoffschmelze, umfassend eine Schmelzedüse, die einen Eingangsanschluß zur Verbindung mit einer Schmelzezufuhr und eine Schmelzeaustrittsöffnung aufweist, die in einen durch im wesentlichen gasundurchlässige Wände definierten Entgasungsraum mündet, der mit einer Vakuumquelle kommuniziert und der eine Austragsöffnung zur im wesentlichen dichten Verbindung mit einem nachfolgenden Schmelzeverarbeitungssystem aufweist, wobei an die Austragsöffnung des Entgasungsraums eine als Zahnradpumpe ausgebildete Schmelzepumpe angeschlossen ist. Eine solche Vorrichtung ist aus der EP-A-316,760 bekannt.

Allgemein ist eine Vorrichtung zur Entgasung von Kunststoffschmelze aus einem Extrudersystem bekannt. Dabei wird in einem Extruder Kunststoffgranulat unter Hitze und Druck geschmolzen und diese Schmelze aus dem Extruder ausgestoßen. Die Schmelze ist jedoch nicht homogen, sondern enthält Lufteinschlüsse, die eine weitere Verarbeitung der Schmelze erschweren. Aus diesem Grund muß die Schmelze entgast, das heißt von Luft- und anderen Gaseinschlüssen befreit werden. Dies kann in der einfachsten Weise dadurch erreicht werden, daß an die Extruderaustragsöffnung ein Vakuumabschnitt angeschlossen ist, durch den die Schmelze strömt. Durch den Unterdruck im Vakuumabschnitt werden Gasbläschen aus der Schmelze herausgezogen und abgeführt. Dieses Verfahren funktioniert aufgrund der hohen Viskosität der Schmelze nur sehr unvollkommen und erfordert weiters ein Hochvakuum, um auch aus dem zentralen Bereich der Schmelze noch die Gasbläschen herausziehen zu können. Hochvakuumapparaturen sind jedoch sehr teuer und empfindlich und verlangen häufige Wartung. Außerdem sind die abgezogenen Gase heiß (typisch 250°C bis 260°C) und enthalten oft aggresive verdampfte Kunststoffzusätze, die die Apparaturen angreifen, sodaß es unter Umständen nötig ist, sie mehrmals im Jahr auszutauschen. Um die Notwendigkeit der Verwendung von Hochvakuum reduzieren zu können, wurde daher die eingangs erwähnte Vorrichtung entwickelt, bei der der Schmelzestrom zunächst durch eine an den Extruderausgang angeschlossene Düse fließt, die eine Düsenplatte mit einer Vielzahl an Durchgangslöchern oder mit einem oder mehreren Durchgangsschlitzen aufweist, wodurch der Schmelzestrom in ein Schmelzeband oder in eine Vielzahl an Teilströmen unterteilt wird. Stromabwärts von der Düsenplatte ist ein Entgasungsraum angeschlossen, der unter Vakuum steht und durch den die Schmelzeströme nach Verlassen der Düse fließen. Da die Dicke der Schmelzeströme durch die Düsenplatte verringert wurde, ist kein so hohes Vakuum nötig wie bei der direkten Entgasung des Schmelze-Gesamtstromes.

Nach Verlassen des Entgasungsraumes wurde nach dem Stand der Technik die Schmelze einem Austragsextruder zugeführt, der die Teilströme wieder zu einem Gesamtschmelzestrom sammelte und unter Hitze- und Druckeinwirkung zu einem nachfolgenden Verarbeitungssystem förderte, wie z.B. aus der AT 283709 bekannt.

Die Verwendung des Austragsextruders ist jedoch insofern mit Nachteilen verbunden, als ein Extruder ein teures und wartungsintensives Bauteil ist und außerdem seine Förderleistung nur sehr ungenau steuerbar ist, was im nachfolgenden Schmelzeverarbeitungssystem durch erhöhten konstruktiven Aufwand ausgeglichen werden muß.

Der vorliegenden Erfindung lag daher das Problem zugrunde, die vorstehenden Nachteile zu überwinden und eine verbesserte Vorrichtung zur Entgasung von Schmelze zu schaffen, die darüber hinaus noch in der Herstellung und durch verlängerte Wartungsintervalle im laufenden Betrieb billiger sein sollte.

Diese Aufgabe wurde erfindungsgemäß dadurch gelöst, daß, wie aus der erwähnten EP-A-316,760 an sich bekannt, anstelle des Austragsextruders eine Schmelze-Zahnradpumpe an die Austragsöffnung des Entgasungsraums angeschlossen und stromaufwärts vom Kämmungsabschnitt der Zahnräder ein Schmelzeverteiler angeordnet ist, um die Strömungsrichtung der Schmelze innerhalb der Zahnradpumpe günstig zu beeinflußen. Vorzugsweise weist der Schmelzeverteiler eine Heizeinrichtung auf. Die Erfindung nützt dabei die Erkenntnis, daß der aus dem Entgasungsraum kommende Schmelzestrom durch die vorhergehende Behandlung noch heiß und relativ dünnflüssig ist, sodaß die in einem Extruder herrschenden hohen Drücke und Temperaturen zur Förderung gar nicht benötigt werden, sondern vielmehr das Betriebsverhalten einer Pumpe für den vorliegenden Einsatzzweck besser geeignet ist.

Um die Schmelze für eine nachfolgende Verarbeitung auf einer gewünschten Temperatur zu halten, ist es zweckmäßig, wenn die Schmelzepumpe eine Heizeinrichtung aufweist.

Zur besseren Anpassung an ein nachfolgendes Schmelzeverarbeitungssystem ist vorteilhaft vorgesehen, daß die Förderleistung der Schmelzepumpe regelbar ist. Die Förderleistungen von Pumpen sind im übrigen wesentlich genauer regelbar als jene von Extrudem, die durch Variierung der Drehzahl der Förderschnecke geregelt werden, wobei das Förderverhalten der Schnecke selbst ungenau und veränderlich ist. Die Zahnradpumpe bietet dagegen eine gute Förderleistung, ist robust, klein und wartungsfrei. Ihre Förderleistung wird durch eine Drehzahlregelung der Zahnradumdrehungsgeschwindigkeiten geregelt, wobei die Regelung von Parametern, wie dem Füllstand im nachfolgenden Schmelzeverarbeitungssystem etc., abhängig sein kann.

Bei Anlagen nach dem Stand der Technik mit nachgeschaltetem Austragsextruder mußte die Austragsöffnung des Entgasungsraumes schmal sein. Dies ist bei der erfindungsgemäßen Vorrichtung nicht mehr nötig. Vielmehr ist es vorteilhaft, bei Verwendung einer Zahnradpumpe die Breite des Schmelzeeintritts der Zahnradpumpe so zu gestalten, daß sie größer ist als der Abstand der Zahnradmittelpunkte voneinander.

Eine Ausführungsform der Erfindung wird nun anhand der Zeichnung beispielhaft erläutert. In der Zeichnung zeigen Fig.1 eine schematische Gesamtdarstellung einer Kunststoffverarbeitungsanlage unter Verwendung der erfindungsgemäßen Vorrichtung zur Entgasung von Schmelze, Fig.2 zwei Beispiele von Düsenkonfigurationen der Entgasungsvorrichtung und Fig.3 eine erfindungsgemäße Zahnradpumpe zur Verwendung in der Entgasungsvorrichtung im Längsschnitt.

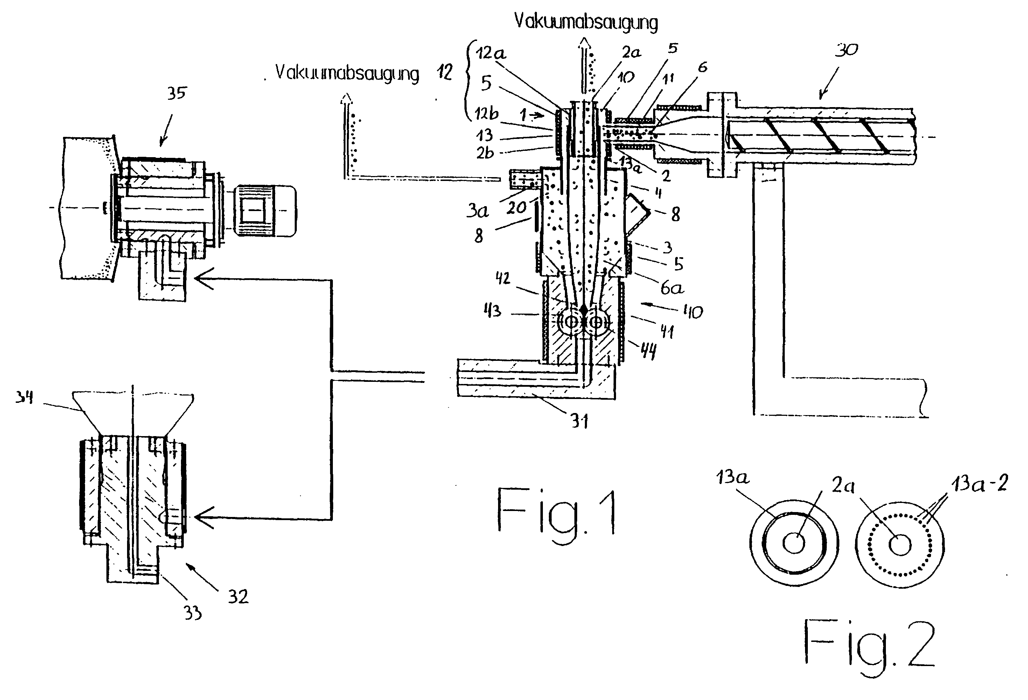

Es wird zunächst auf Fig.1 Bezug genommen, die eine schematische Gesamtdarstellung einer Kunststoffverarbeitungsanlage zeigt, bei der die erfindungsgemäße Vorrichtung zur Entgasung von Schmelze zum Einsatz kommt.

Die in Fig. 1 im Längsschnitt dargestellte Ausführungsform der Anlage mit der erfindungsgemäßen Vorrichtung zur Entgasung von Schmelze ist als Entgasungskopf ausgebildet, der einem Kunststoff-Extruder 30 nachgeschaltet ist, um die vom Extruder erzeugte Kunststoffschmelze 6 von Gaseinschlüssen zu befreien. Die Anlage weist eine allgemein mit 1 bezeichnete Düse sowie stromabwärts davon einen allgemein mit 20 bezeichneten Entgasungsraum auf. Die Düse 1 besitzt einen allgemein hohlzylindrischen Körper 10, in den radial ein hohler Stutzen 11 mündet, der an die Austragsöffnung des Kunststoff-Extruders 30 o.dgl. angeschlossen werden kann. Sowohl der Düsenkörper 10 als auch der Stutzen 11 sind an ihren Außenseiten von Heizelementen 5 umgeben. Am Stutzen kann weiters ein nicht dargestellter Filter vorgesehen sein, um im Schmelzestrom enthaltene Fremdkörper, insbesondere endzündbare Fremdkörper wie Papier, aus dem Schmelzestrom zu entfernen und somit wirkungsvoll zu verhindern, daß sich die Fremdkörper in der Entgasungsvorrichtung entzünden oder die Düsenkanäle verstopfen. Der Düsenkörper weist eine axiale Durchgangsbohrung 12 auf, die einen ersten, stromaufwärtigen Abschnitt 12a und einen stromabwärts davon befindlichen zweiten Abschnitt 12b mit einem gegenüber dem ersten Abschnitt 12a vergrößertem Radius besitzt. Vom stromabwärtigen Ende der Durchgangsbohrung 12 ist ein hohlzylindrischer Düseneinsatz 2 in die Durchgangsbohrung 12 eingesetzt, wobei eine Durchgangsbohrung des Düseneinsatzes 2 mit dem Bezugszeichen 2a bezeichnet ist. Der Außenradius des Mantels des Düseneinsatzes 2 entspricht dem Radius des Abschnittes 12a der Durchgangsbohrung 12 des Düsenkörpers 10, sodaß der Düseneinsatz eng in den Abschnitt 12a im Düsenkörper eingepaßt werden kann. Zwischen der Wand des erweiterten Abschnitts 12b der Durchgangsbohrung 12 des Düsenkörpers 10 und der Außenperipherie des Mantels des Düseneinsatzes 2 entsteht jedoch ein Ringspalt 13, da der Radius des Mantels des Düseneinsatzes zunächst konstant ist und sich erst nahe seinem stromabwärtigen Ende hin verändert (bei 2b angezeigt), um den Ringspalt 13 auf die für die Schmelzeaustrittsöffnung 13a erwünschte Breite einzustellen. Der Stutzen 11 mündet in diesen Ringspalt 13. Durch den Stutzen 11 in die Düse 2 eintretende Schmelze 6 verteilt sich im Ringspalt 13 und tritt an seinem stromabwärtigen Ende, d.h. an der Schmelzeaustrittsöffnung 13a, als Schmelzeschlauch 6a mit sehr geringer Dicke aus. Es ist anzumerken, daß der Düseneinsatz 2 gegen anders dimensionierte Einsätze austauschbar ist, um die Größe des Ringspalts bzw. der Schmelzeaustrittsöffnung einzustellen. Außerdem kann anstelle eines Ringspalts auch eine andere Düsenkonfiguration benutzt werden. Fig.2 zeigt in Draufsicht zwei Ausführungsbeispiele von Düsenkonfigurationen: links die eben besprochene mit einem Ringspalt 13a und rechts eine Ausführungsform mit einer Vielzahl von Durchgangslöchem 13a-2, so daß die Schmelze in eine entsprechende Vielzahl an "spaghetti"-förmigen Teilströmen unterteilt wird. Bei beiden Ausführungsformen ist die Durchgangsbohrung 2a zur Kommunikation mit einer Vakuumquelle vorgesehen.

An den Ausgang der Düse 2 ist über ein Verbindungsrohr 4 ein Entgasungsrohr 3 vakuumdicht angeschlossen, das in seinem Inneren einen Entgasungsraum 20 definiert, der über einen Anschluß 3a des Entgasungsrohres 3 mit einer nicht dargestellten Vakuumquelle kommuniziert. Es ist anzumerken, daß der Begriff Vakuum, wie hierin verwendet, jeden geeigneten Unterdruck umfaßt. Der aus der Düse 2 austretende, mit Gaseinschlüssen behaftete Schmelzeschlauch 6a strömt somit in den Entgasungsraum 20, wo aufgrund des herrschenden Unterdrucks Gasbläschen aus dem Schmelzeinneren an die Oberfläche und dann durch den Anschluß 3a nach außen abgezogen werden, wie durch die Bläschen und kleinen Pfeile im Entgasungsraum bzw. durch den großen Pfeil mit danebenliegenden Bläschen neben dem Anschluß 3a dargestellt. Aufgrund der Konfiguration der durchströmenden Schmelze als kontinuierlicher Schlauch ist jedoch der Innenraum 20a des Schmelzeschlauches 6a vom Entgasungsraum 20 abgeschlossen. Es ist jedoch wünschenswert, auch den Innenraum 20a unter denselben Unterdruck zu setzen wie den Entgasungsraum 20, um auch vom Innenraum 20a aus die Entgasung der Schmelze durchzuführen und ein Aufblähen des Schmelzeschlauches durch Druckunterschiede zwischen dessen Innen- und Außenseite zu verhindern. Aus diesem Grund wurde im Düseneinsatz 2 die Durchgangsbohrung 2a vorgesehen, die mit einer nicht dargestellten Vakuumquelle verbunden wird. Zweckmäßig ist dabei die Vakuumquelle dieselbe, mit der der Anschluß 3a des Entgasungsrohrs 3 verbunden ist, wodurch Druckunterschiede zwischen Innen- und Außenseite des Schmelzeschlauches verhindert werden. Da die Vakuumquelle aufgrund der geringen Wandstärke des Schmelzeschlauches kein besonders hohes Vakuum zur Entgasung liefern muß, kann ein Seitengebläse oder eine Venturi-Strahlpumpe zum Einsatz kommen. Die Verwendung einer Venturi-Strahlpumpe (auch als Venturi-System oder Strahlejektorpumpe bekannt) wird bevorzugt, da sie keine bewegten Teile enthält und leicht korrosionsfest beschichtet werden kann, wodurch sie gegenüber anderen Typen von Vakuumpumpen mit einer wesentlich längeren Lebensdauer besticht.

Der Fortschritt der Entgasung des Schmelzeschlauches 6a kann über Sichtfenster 8 im Entgasungsrohr 3 kontrolliert werden. Auch das Entgasungsrohr 3 ist von einer Heizeinrichtung 5 umgeben. Während des Hindurchfließens des Schmelzeschlauches 6a durch den Entgasungsraum werden kontinuierlich Gasbläschen aus der Schmelze gezogen und abgeführt, sodaß der Schmelzeschlauch bei Erreichen des stromabwärtigen Endes des Entgasungsraums zufriedenstellend entgast worden ist und damit einer weiteren Verarbeitung zugeführt werden kann. Dies gilt in gleicher Weise für eine Ausführungsform, bei der der Schmelzestrom in eine Vielzahl an "spaghetti"-förmigen Teilströmen aufgeteilt wurde.

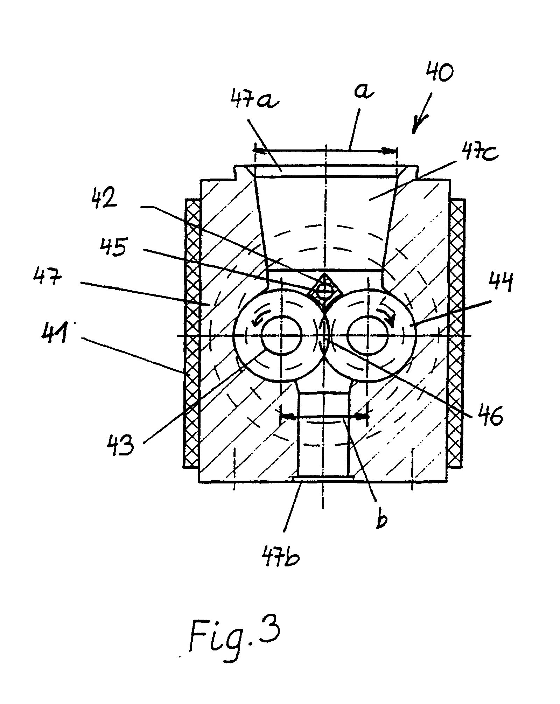

An den Ausgang des Entgasungsrohres ist in vakuumdichter Weise die erfindungsgemäße Schmelzepumpe 4 angeschlossen. Diese Pumpe ist in der vorliegenden Ausführungsform eine Zahnradpumpe, die im folgenden unter besonderer Bezugnahme auf Fig.3, die eine vergrößerte Darstellung der Pumpe im Längsschnitt zeigt, beschrieben wird. Ihre wesentliche Aufgabe ist es, die Schmelze wieder zu einem Gesamtstrom zu verdichten und den Druck dieser Schmelze auf die zur nachfolgenden Verarbeitung notwendige Höhe anzuheben. Es ist zu berücksichtigen, daß die Entgasung der Schmelze im Unterdruck erfolgte, d.h. der vom Extruder 30 erzeugte Schmelzedruck vollkommen abgebaut worden war. Die Pumpe 40 besteht aus einem Gehäuse 47, das einen Schmelzeeintritt 47a und einen Schmelzeaustritt 47b, der zugleich die Druckseite der Pumpe repräsentiert, aufweist. Das Gehäuse 47 ist von einem Heizelement 41 umgeben, das das Gehäuse auf einer vorbestimmten Temperatur hält. Im Gehäuseinneren ist ein durch Schmelzeeintritt 47a und -austritt 47b sowie durch Gehäusewände begrenzter Hohlraum 47c definiert, der in einem Mittelabschnitt so ausgebildet ist, daß die Gehäusewände zwei kämmende Zahnräder 43, 44 möglichst nahe teilweise umschlingen. Die Zahnräder sind so im Gehäuse gelagert, daß ihre Stirnflächen gegen das Gehäuse abdichten und eines der Zahnräder mit einer nicht dargestellten, aus dem Gehäuse heraustretenden Antriebswelle verbunden ist. Die Zahnräder 43, 44 können als gezahnte Wellen ausgebildet sein. Sie werden - wie durch Pfeile dargestellt - gegensinnig gedreht, sodaß im Hohlraum 47c vorhandene Schmelze in den Zahnzwischenräumen aufgenommen und an den Gehäusewänden entlang gefördert wird. Der Kämmungsabschnitt 46 zwischen den Zahnrädern ist durch entsprechende Gestaltung der Zähne dicht, so daß durch ihn keine Schmelze hindurchtreten kann. Stromaufwärts vom Kämmungsabschnitt 46 ist ein Schmelzeverteiler 42 vorgesehen, der den hereinkommenden Schmelzestrom nach außen ablenkt und so zum jeweiligen Spalt zwischen den Zahnrädern und den Gehäusewänden zuführt. Zweckmäßig ist der Schmelzeverteiler 42 durch ein Heizelement 45 beheizt.

Um sicherzustellen, daß die Schmelzezufuhr zu den Zahnrädern und der Transport durch die Zahnräder kontinuierlich verläuft, ist es günstig, den Schmelzeeintritt 47a mit einer Breite a auszubilden, die größer ist als die Distanz b der Mittelpunkte der Zahnräder 43,44 voneinander. Auf diese Weise ist gewährleistet, daß sich einlaßseitig stets ein ausreichend großer Schmelzevorrat ansammeln kann.

Die Förderleistung der Pumpe 40 kann durch eine geeignete Drehzahlregelung erfolgen, wobei die Fördermenge aufgrund des genau definierten Volumens der Zahnzwischenräume der Zahnräder 43, 44 sehr genau eingestellt werden kann. Ebenso ist es möglich, den Druck am Pumpenausgang zu messen und durch Veränderung der Zahnräder-Drehzahl zu regulieren.

Nun wieder auf Fig. 1 Bezug nehmend, ist an den Auslaß der Pumpe 40 ein Förderrohr 31 angeschlossen, das die durch die Pumpe unter Druck gesetzte Schmelze zu weiteren Verarbeitungsstationen zuführt. Diese können beispielsweise eine Vorrichtung 32 zur Erzeugung von Blasfolien 34 unter Zuführung von Druckluft durch ein zentrales Luftrohr 33 in den Schmelzestrom sein oder eine Granuliervorrichtung 35. Beide Vorrichtungen sind dem Fachmann bekannt und bedürfen keiner näheren Erläuterung.

## Patentansprüche

1. Vorrichtung zur Entgasung von Schmelze, insbesondere Kunststoffschmelze, umfassend eine Schmelzedüse (1), die einen Eingangsanschluß (11) zur Verbindung mit einer Schmelzezufuhr und eine Schmelzeaustrittsöffnung (13a) aufweist, die in einen durch im wesentlichen gasundurchlässige Wände definierten Entgasungsraum (20) mündet, der mit einer Vakuumquelle kommuniziert und der eine Austragsöffnung zur im wesentlichen dichten Verbindung mit einem nachfolgenden Schmelzeverarbeitungssystem aufweist, wobei an die Austragsöffnung des Entgasungsraums (20) eine als Zahnradpumpe ausgebildete Schmelzepumpe (40) angeschlossen ist, **dadurch gekennzeichnet, daß** stromaufwärts vom Kämmungsabschnitt (46) der Zahnräder (43,44) der Schmelzepumpe (40) ein Schmelzeverteiler (42) angeordnet ist.

2. Vorrichtung nach Anspruch 1, **dadurch gekennzeichnet, daß** die Schmelzepumpe (40) eine Heizeinrichtung (41) aufweist.

3. Vorrichtung nach Anspruch 1 oder 2, **dadurch gekennzeichnet, daß** die Förderleistung der Schmelzepumpe (40) regelbar ist.

4. Vorrichtung nach Anspruch 3, **dadurch gekennzeichnet, daß** die Schmelzepumpe (40) eine Drehzahlregelung aufweist.

5. Vorrichtung nach Anspruch 1, **dadurch gekennzeichnet, daß** der Schmelzeverteiler (42) eine Heizeinrichtung (45) aufweist.

6. Vorrichtung nach einem der Ansprüche 1 bis 5, **dadurch gekennzeichnet, daß** die Breite (a) des Schmelzeeintritts (47a) der Schmelzepumpe (40) größer ist als der Abstand (b) der Zahnradmittelpunkte voneinander.

## Claims

1. A device for degassing melts, in particular plastic melts, comprising a melt nozzle (1) which has an inlet connection (11) for connecting to a melt supply, and a melt outlet opening (13a) which opens into a degassing chamber (20) defined by essentially gas-impermeable walls, which communicates with a vacuum source and which is provided with a discharge opening for essentially tight connection to a melt processing system downstream thereof, wherein a melt pump (40) configured as a gear pump is connected to the discharge opening of the degassing chamber (20), **characterized in that** a melt distributor (42) is arranged upstream of the mating portion (46) of the gears (43, 44) of the melt pump (40).

2. The device according to claim 1, **characterized in that** the melt pump (40) is provided with heating means (41).

3. The device according to claim 1 or 2, **characterized in that** the pump capacity of the melt pump (40) may be controlled.

4. The device according to claim 3, **characterized in that** the melt pump (40) is provided with a speed controlling device.

5. The device according to claim 1, **characterized in that** the melt distributor (42) is provided with heating means (45).

6. The device according to one of claims 1 to 5, **characterized in that** the width (a) of the melt inlet (47a) of the melt pump (40) is larger than the mutual distance (b) of the gear centres.

## Revendications

1. Dispositif pour dégazer une masse fondue, en particulier une masse fondue en matière plastique, comprenant un injecteur de masse fondue (1) qui présente un raccord d'entrée (11) pour la liaison avec une alimentation en masse fondue et un orifice de sortie de masse fondue (13a), qui débouche dans un espace de dégazage (20) défini par des parois essentiellement imperméables aux gaz, communiquant avec une source de vide et présentant un orifice d'évacuation établissant une liaison essentiellement étanche avec un système de traitement de masse fondue placé en aval, une pompe de masse fondue conçue comme une pompe à engrenages étant raccordée à l'orifice d'évacuation de l'espace de dégazage (20), **caractérisé en ce qu'**un distributeur de masse fondue (42) est disposé en amont du segment de serrage (46) des roues dentées (43, 44) de la pompe de masse fondue (40).

2. Dispositif selon la revendication 1, **caractérisé en ce que** la pompe de masse fondue (40) présente un équipement de chauffage (41).

3. Dispositif selon la revendication 1 ou 2, **caractérisé en ce que** le débit de la pompe de masse fondue (40) est réglable.

4. Dispositif selon la revendication 3, **caractérisé en ce que** la pompe de masse fondue (40) présente une régulation de vitesse.

5. Dispositif selon la revendication 1, **caractérisé en ce que** le distributeur de masse fondue (42) présente un équipement de chauffage (45).

6. Dispositif selon l'une des revendications 1 à 5, **caractérisé en ce que** la largeur (a) de l'entrée de masse fondue (47a) de la pompe de masse fondue (40) est plus grande que l'écart (b) entre les centres des roues dentées.
